# EUROPEAN PATENT APPLICATION

(11) **EP 3 466 892 A1**
(43) Date of publication of application: **10.04.2019**
(21) Application number: 18198867.6
(22) Date of filing: 05.10.2018
(51) Int. Cl.: C02F 1/66, B08B 3/04, B08B 9/08, C02F 103/12

(54) **APPARATUS AND METHOD FOR USE IN A WASHING PROCESS FOR A MOBILE SEDEMENTITIOUS/CEMENTITIOUS MATERIAL CONTAINER OR MIXER**

(30) Priority: 06.10.2017 GB 201716390
(71) Applicant: Hymix Ltd, Birmingham, West Midlands B30 3JN (GB)
(72) Inventor: HUMPISH, Nicholas, Birmingham, West Midlands B30 3JN (GB)
(74) Representative: Wynne-Jones IP Limited

(57) **Abstract**

Apparatus adapted for use in a washing process for a mobile sedimentitious/cementitious material container or mixer including a waste tank (122) for receiving and storing a mixture (130) of wash off water and waste sedimentitious/cementitious material collected during a washing process, the apparatus comprising at least one pH sensor (132) adapted to be mounted in or on said waste tank (122) to measure a pH level of said mixture (130) and output pH data representative thereof, a processor (140) having an input communicably coupled to an output of said pH sensor (132) for receiving said pH data and configured to generate a signal if said pH level is at or above a predetermined threshold, and a dispensing device (142) comprising a reservoir (144) for storing a volume of a neutralising agent, an outlet (146) adapted to be coupled to the interior of said waste tank (122), and a dose dispensing mechanism (148) configured, in response to a signal from said processor (140), to measure and dispense a dose of said neutralising agent from said reservoir (144) into said waste tank (122) via said outlet (146).

## Description

This invention relates generally to an apparatus and method for use in a washing process for a mobile sedementitious/cementitious material container or mixer and, more particularly, to an apparatus and method for neutralising wash off water collected during a washing process in respect of such a container or mixer.

It is known to provide vehicles or trailers that include containers/drums for mixing or holding sedimentitious/ cementitious materials, such as concrete, mortar, floor screed or the like. Washing such apparatus regularly whilst on site is important because waste material can set and cause damage. However, it has, conventionally, been difficult to wash such apparatus at work sites because it can result in contaminants being dispersed all over the area. Depending on the nature of the material in question, this could cause environmental problems due to undesirable pH levels and the chemical make up of the materials.

A known solution to the above problem is to provide an assembly that collects the waste water/material that is produced/discharged during the washing process, storing it in a tank on the vehicle. This type of conventional wash off tank is emptied upon arrival at a suitable storage/disposal and/or treatment point, either by opening one or more valves or small openings on its lower elevations and/or its underside to allow water to flow out whilst the tank remains static, or by tilting/tipping the tank such that the material is poured out. Whilst the waste material is being held in the wash off tank, it is able to mix with the waste water used to perform the washing process, making the water highly caustic. Thus, and because the waste water will therefore require a neutralising treatment before the wash tank is emptied, the emptying process is usually performed when the vehicle returns to the plant, rather than at the work site. However, movement of the vehicle and changing dynamic forces created whilst the vehicle travels from the work site back to the plant accelerates and exacerbates the mixing process, making the waste water even more caustic. Thus, after emptying the wash off tank back at the plant, it is known to introduce a neutralising agent into the waste water to neutralise the pH level of the wash off water. Not only is this a complex process that is prone to error, this also means that the wash off water poses a risk to anyone that may come into contact with it in the interim. This could be the truck operator, other personnel or, in the event of a road traffic accident, materials could be spilled at the scene of the incident, potentially harming anyone in the vicinity and/or the environment.

Aspects of the present invention seek to address at least some of these issues and, in accordance with a first aspect of the present invention, there is provided apparatus adapted for use in a washing process for a mobile sedimentitious/cementitious material container or mixer including a waste tank for receiving and storing a mixture of wash off water and waste sedimentitious/cementitious material collected during a washing process, the apparatus comprising at least one pH sensor adapted to be mounted in or on said waste tank to measure a pH level of said mixture and output pH data representative thereof, a processor having an input communicably coupled to an output of said pH sensor for receiving said pH data and configured to generate a signal if said pH level is above a predetermined threshold, and a dispensing device comprising a reservoir for storing a volume of a neutralising agent, an outlet adapted to be coupled to the interior of said waste tank, and a dose dispensing mechanism configured, in response to a signal from said processor, to measure and dispense a dose of said neutralising agent from said reservoir into said waste tank via said outlet.

In accordance with a second aspect of the present invention, there is provided a kit of parts for a mobile sedimentitious/cementitious material container or mixer, the kit comprising a waste tank for receiving and storing a mixture of wash off water and waste sedimentitious/cementitious material collected during a washing process, at least one pH sensor adapted to be mounted in or on said waste tank to measure a pH level of said mixture and output pH data representative thereof, a processor having an input communicably coupled to an output of said pH sensor for receiving said pH data and configured to generate a signal if said pH level is above a predetermined threshold, and a dispensing device comprising a reservoir for storing a volume of a neutralising agent, an outlet adapted to be coupled to the interior of said waste tank, and a dose dispensing mechanism configured, in response to a signal from said processor, to measure and dispense a dose of said neutralising agent from said reservoir into said waste tank via said outlet.

In accordance with a third aspect of the present invention, there is provided a method for use in a washing process for a mobile sedimentitious/cementitious material container or mixer including a waste tank for receiving and storing a mixture of wash off water and waste sedimentitious/cementitious material collected during a washing process, the method comprising mounting at least one pH sensor in or on said waste tank and measuring therewith a pH level of said mixture so as to output pH data representative thereof, configuring a processor having an input communicably coupled to an output of said pH sensor for receiving said pH data to generate a signal if said pH level is above a predetermined threshold, providing a dispensing device comprising a reservoir for storing a volume of a neutralising agent, coupling an outlet of the reservoir to the interior of said waste tank, and providing a dose dispensing mechanism configured, in response to a signal from said processor, to measure and dispense a dose of said neutralising agent from said reservoir into said waste tank via said outlet.

In an exemplary embodiment, the pH sensor is configured to continuously or periodically measure the pH level of the mixture in the waste tank and the processor is configured to generate a said signal each time the pH level is determined to be above said predetermined threshold.

In an exemplary embodiment, the neutralizing agent may comprise a product marketed by Mudtech Ltd under the identifying name pH Blue, although the present invention is not necessarily intended to be limited in this regard. The neutralizing agent may comprise a concentrate. The preferred maximum dose delivered in response to each said signal is, of course, dependent on the relative strength of the neutralizing agent. For example, for a non concentrated neutralizing agent, up to 10-50 litres of the neutralizing agent may be delivered in doses of 1-10 litres each (i.e. in response to each said signal). However, the present invention is not necessarily intended to be limited in this regard and, in alternative exemplary embodiments, the neutralizing agent may be concentrated, in which the total dose required may be reduced, e.g. by a factor of 10, thus reducing each dose by the same factor.

The pH sensor may comprise a pH meter comprising a pH measuring electrode which extends through a wall of said waste tank into said mixture, and a high input impedance meter that is located externally of the waste tank.

The predetermined threshold is beneficially set according to the upper end of a target range. Thus, where the target range for disposal to foul sewer is pH 8.4-8.9, the predetermined threshold may be around 9. However, where the target range is lower or higher, the predetermined threshold will be lower or higher accordingly, and the present invention is not intended to be limited in this regard.

In an exemplary embodiment, the same dose of neutralizing agent is caused to be dispensed by the dispensing device each time the processor determines that the pH level of the mixture is above said predetermined threshold level. This may be achieved by opening said outlet for the same predetermined period of time. Alternatively, the dispensing device may further comprise a metering device for measuring a predetermined dose of the neutralizing agent to be dispensed in response to each said signal from said processor.

These and other aspects of the present invention will be apparent from the following specific description, in which embodiments of the present invention are described, by way of examples only, and with reference to the accompanying drawings, in which:
Figure 1 is a schematic rear-nearside view of part of a mobile sedimentitious/cementitious material mixer assembly;
Figure 2 is a schematic block diagram of apparatus according to an exemplary embodiment of the present invention; and
Figure 3 is a schematic flow diagram illustrating a method according to an exemplary embodiment of the present invention.

It is well known in the art that the mixture of wash water and waste material generated during a washing process in respect of a mobile sedimentitious/cementitious material container and mixer can (and usually does) result in the waste water becoming highly caustic, i.e. highly alkaline. The level of treatment required for wash water from, for example, concreting operations to meet a standard suitable for disposal tends to be dictated by statutory regulations. However, in general, the most common treatment required is the removal of suspended solids and the reduction of the pH level to and acceptable value.

Methods are known for effecting suspended solids removal, which typically involve settlement of the solids, but adequate pH adjustment is much more complex and requires a number of factors to be taken into consideration. These factors include the health, safety and environmental issues associated with the reagents used for pH adjustment, the ease of control and in particular the risk of overdosing (thereby acidifying the water), any limits imposed by associated statutory regulations, and cost. Therefore, and as explained above, this process has conventionally been undertaken back at the plant, rather than on the work site, resulting in the above-mentioned inherent additional problems and drawbacks.

Concrete wash water typically has a pH of between 11 and 13.6 (depending on the degree of dilution) due to the presence of dissolved lime (calcium hydroxide) and other hydroxides released as the cementitious material hydrates.

Commonly used reagents for neutralising concrete wash water are mineral acids (either sulphuric or hydrochloric acid), citric acid and carbon dioxide. There are a number of issues associated with manual treatment of wash water using these reagents, especially the acids. For example, precise pH control is difficult to achieve due to the near vertical gradient of the titration curve over the normal treated water pH range and, in order to achieve accurate pH control, the acid needs to be added in a number of stages and a failsafe system installed to prevent the treated water being discharged off site if out of specification (i.e. overdosed). In addition, specialist handling, training and PPE are required for operatives handling the acid on site. Therefore, carbon dioxide has become the neutralising agent of choice in many cases, as it overcomes many of the difficulties associated with the use of acids. For example, carbon dioxide is self-buffering such that it is virtually impossible to acidify the water through overdosing. The health and safety issues associated with the use of acids are avoided. Furthermore, and unlike citric and mineral acids, the byproducts of neutralising water with carbon dioxide are non-hazardous and in certain circumstances are considered beneficial. However, the bottles in which carbon dioxide is provided are large and heavy and, therefore, pose storage and transport issues. Therefore, it is becoming increasingly common to use pre-measured dosing tablets or pouches comprising or containing a neutralising agent and which, when dropped in water, dissolve to release carbon dioxide and/or other neutralising agents. However, these can result in more neutralising agent than is necessary being used, which has significant cost and environmental implications, and can cause overdosing of the type described above.

Thus, it can be seen that all of the commonly used agents and neutralising methods have drawbacks which can be overcome using apparatus according to an exemplary embodiment of the present invention.

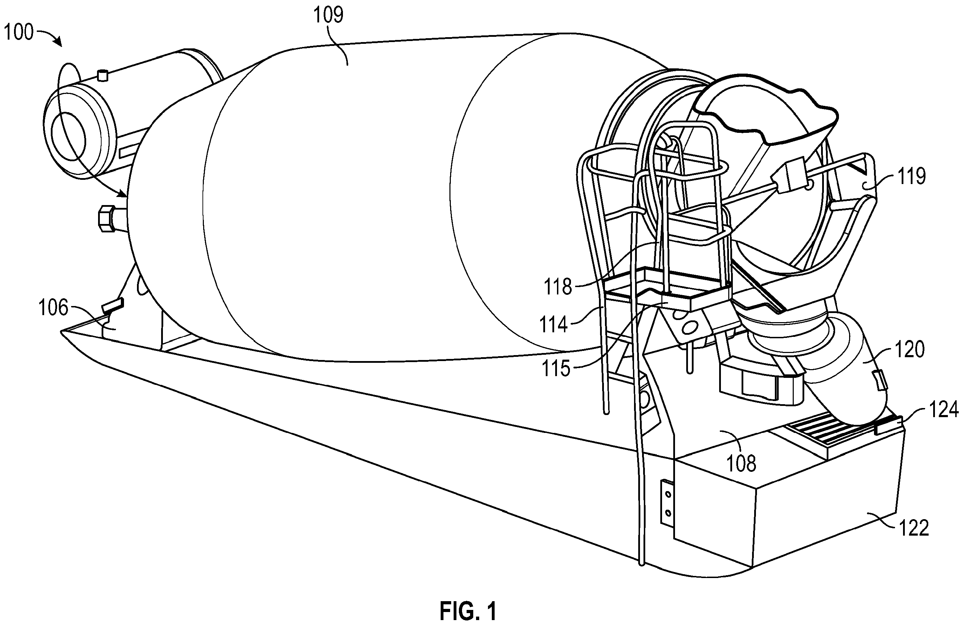

Referring to Figure 1 of the drawings, a sedimentitious/cementitious mixer assembly 100 typically comprises a front support stool106 and a rear support stool 108 upon which, in use, a rotatable mixing drum 109 is mounted. It will be appreciated that other components of a frame for fixing the drum to a vehicle/trailer may also be included, as well as components such as mud guards, side guards and lamp assemblies. The general construction of such frames/components are known to a person skilled in the art and need not be described herein in detail. The frame and other assembly components will typically be formed of steel, but it will be appreciated that other suitable materials can be used.

The rear end of the assembly 100 can further include a ladder 114 and platform 115 that allow a worker to access the mouth 116 of the drum 109 to perform a washing operation. At least one hose 118 (typically connected to an on-board pressurised water supply) may also be provided. The illustrated example also has a discharge hopper 119 located below the drum mouth. An adjustable pan chute 120 can be located below the discharge hopper 119. The discharge end of the pan chute 120 is positioned above a waste tank 122, as will be described in more detail hereinafter.

As shown in Figure 1, the waste tank 122 comprises a generally rectangular shaped housing having a covered upper face. An aperture 124 is provided in the upper face. The bottom end of the tank 122 is provided with a discharge aperture (not shown in Figure 1) to which a flexible discharge hose (not shown) is or may be connected to discharge the contents of the waste tank 122 as required. The aperture 124 may have a removable cover (not shown).

During a washing operation, the user uses the hose 118 to spray clean water into the drum 109 and other components, and dirty water then passes out into the discharge hopper 119. The user positions the chute 120 above the aperture 124 in the waste tank 122, as shown in Figure 1, such that the dirty water (including cementitious/sedimentitious waste material) passes from the chute 120 into the waste tank 122. The waste tank 122 may take several forms (and may be located in alternative positions on the vehicle/trailer, and the present invention is not intended to be limited in this regard.

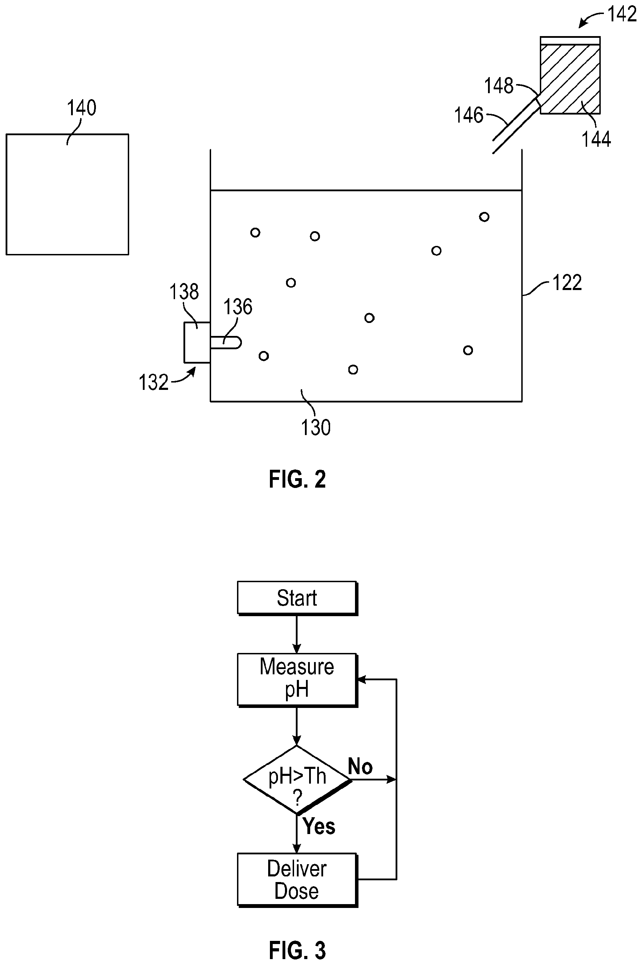

Referring now additionally to Figure 2 of the drawings, after a washing operation, the waste tank 122 is, at least partially, full of a mixture 130 of waste water and sedimentitious/cementitious material which, of left untreated, will very quickly become highly caustic. In accordance with the present invention, a pH sensor 132 is mounted on the waste tank 122, through an aperture in a side or rear wall thereof, for example, such that the probe (or sensing region) 136 thereof is located within the waste tank 122 and the electronic circuitry associated therewith (denoted generally at 138) is located outside the waste tank 122. pH sensors or meters are known and many different types exist, and the present invention is not necessarily intended to be limited in this regard. Such devices are scientific instruments that measure the hydrogen-ion activity in water-based solutions, and generate a data signal representing their acidity or alkalinity expressed in pH, and they typically comprise a pH measuring electrode, a reference electrode and a high input impedance meter. It is the pH measuring electrode 136 that is located within the waste tank 122. Of course, more than one pH sensing device may be used, and the present invention is not necessarily intended to be limited in this regard. It is considered desirable to have at least one pH probe/electrode located toward the bottom of the waste tank 122, to ensure that the apparatus will operate correctly even when the level of liquid in the waste tank 122 is relative low, but the present invention is not necessarily strictly intended to be limited in this regard.

The high input impedance meter, located at 138, generates a pH value representative, in this case, of the alkalinity of the mixture 130. Data representative of this value is transmitted to a processor 140, which may be located at any convenient location within (or even remote from) the vehicle/trailer. In some exemplary embodiments, the processor 140 may form part of a more general vehicle control systems, although stand-alone and/or retrofit embodiments of the present invention are also envisaged. Such data transmission may be effected wirelessly by any known means of short range wireless data transmission, or by means of a wired connection, and the present invention is not necessarily intended to be limited in this regard.

Referring additionally to Figure 3 of the drawings, the processor 140 compares the pH data against a predetermined threshold (e.g. around pH 9). If the pH data indicates that the alkalinity of the mixture 130 has a pH value equal to or greater than the predetermined threshold, it generates a signal.

Referring back to Figure 2 of the drawings, apparatus according to an exemplary embodiment of the present invention further comprises a dispensing device 142. The dispensing device 142 comprises a reservoir 144, mounted externally of the waste tank 122 and containing a volume of pH neutralizing agent (e.g. the above-mentioned pH Blue marketed by Mudtech Ltd). It would be advantageous to use a concentrate of the neutralizing agent to reduce the size of the reservoir in the dispenser and to limit the weight of the neutralizer and/or the frequency with which it needs to be 'topped' up or replenished. The reservoir 144 has an outlet pipe 146 coupled to the interior of the waste tank 122. The outlet pipe 146 includes a valve 148 (or other device that can selectively open and close the flow path between the reservoir 144 and the interior of the waste tank 122) that is selectively actuatable by an electronic signal. The valve may, for example, comprise an actuated valve, either solenoid operated or pneumatically operated, although an alternative exemplary embodiment may utilize a hydraulically operated valve, and the present invention is not necessarily intended to be limited in this regard.

The reservoir 144 and outlet pipe 146 are arranged and configured to effect a substantially constant flow rate of neutralizing agent into the waste tank 122 when the valve 148 is open, such that the same (small) metered dose of the agent can be delivered into the mixture 130 in the waste tank 122 by opening the valve for a predetermined period of time. However, in alternative exemplary embodiments, the dispensing device may comprise a metering device for measuring a quantity of the neutralizing agent to be dispensed and causing the valve to close when that quantity has been dispensed into the mixture. Whilst the processor could be configured to calculate a dosage of neutralizing agent to counteract the measured pH level, and then generate actuation signals to cause that dose to be delivered, it is preferred that, in response to each determination that the pH level is above the predetermined threshold, the dispensing device will be caused to dispense the same (small) dose of neutralizing agent into the mixture 130.

In response to a signal (transmitted wirelessly or by wired means) to the dispensing device (from the processor), a calculated or (more preferably) a predetermined (small) dose of the neutralizing agent is dispensed into the mixture 130 in the waste tank 122.

The apparatus may further comprise a level monitoring device (not shown) for monitoring the level (i.e. quantity) of neutralizing agent in the reservoir 144 and generating a warning signal if it drops below a predetermined level (or quantity), the warning signal being displayed to an operative of the vehicle in any convenient manner to inform them that the reservoir 144 needs to be re-filled.

Referring back to Figure 3 of the drawings, the pH sensor continues to monitor the pH of the mixture 130 in the waste tank 122, and further (small) doses of neutralizing agent introduced into the waste tank 122 as required. The apparatus may include means (not shown) for recognising non-conformance with statutory regulations and recording such non-conforming events and any corrective action taken. In addition, or alternatively, the apparatus may be configured to display and/or record conformance with such regulations for display and/or future reporting. Both of these aspects can be performed in real time and displayed or otherwise output in real time and/or stored for later retrieval and analysis.

Thus, the present invention provides an on-board/in situ apparatus and method in which waste water collected during a washing process in respect of a sedimentitious/cementitious material container or mixer can be automatically converted to a composition that is harmless to the operator and anyone else that may come into contact with it. By continuous (or periodic) pH monitoring and the iterative introduction of small doses of neutralizing agent into the mixture 130, it utilises only sufficient neutralizing agent which avoids overdosing and reduces waste (compared with random manual dosing or indiscrete dosing such as with pre-measured dosing tablets or pouches). As explained above, the size of each dose, and the total dose required to lower the pH of the material below the predetermined threshold, is likely to be determined by commercially available neutralizing agents or concentrates thereof. It is though that each dose may be in the range of 0.1 - 1 litre, although the present invention is in no way intended to be limited in this regard.

It will be appreciated by a person skilled in the art, from the foregoing description, that modifications and variations can be made to the described embodiments without departing from the scope of the invention as defined by the appended claims. For example, means may be included for blending a dose of neutralizing agent with the wash water. In this regard, the easiest mixing method on the truck is likely to be the introduction of compressed air. This could be taken from the truck air system through a non return valve which will only permit air to be taken from the system when the system is above a designated pressure such that it does not starve the truck of vital air for its other functions (e.g. braking). The air would then be introduced via pipelines to the tank at a low level so as to maximize the disturbance in the tank reducing the blend time and helping achieve a homogenous neutralized mix. Thus, whilst the system may simply rely on movement of the truck in travel for successful blending of each neutralizing dose with the wash water, the system may include means for accelerating the neutralization process by forced mixing either by the introduction of compressed air or even the operation of mechanical mixing means. This process may be controlled or automated by a control system which causes the additional mixing functionality to operate an appropriate time period after a dose of neutralizing agent has been introduced into the tank.

## Claims

1. Apparatus adapted for use in a washing process for a mobile sedimentitious/cementitious material container or mixer including a waste tank for receiving and storing a mixture of wash off water and waste sedimentitious/cementitious material collected during a washing process, the apparatus comprising at least one pH sensor adapted to be mounted in or on said waste tank to measure a pH level of said mixture and output pH data representative thereof, a processor having an input communicably coupled to an output of said pH sensor for receiving said pH data and configured to generate a signal if said pH level is at or above a predetermined threshold, and a dispensing device comprising a reservoir for storing a volume of a neutralising agent, an outlet adapted to be coupled to the interior of said waste tank, and a dose dispensing mechanism configured, in response to a signal from said processor, to measure and dispense a dose of said neutralising agent from said reservoir into said waste tank via said outlet.

2. Apparatus according to claim 1, wherein, the pH sensor is configured to continuously or periodically measure the pH level of the mixture in the waste tank and the processor is configured to generate a said signal each time the pH level is determined to be at or above said predetermined threshold.

3. Apparatus according to claim 1 or claim 2, wherein the neutralizing agent comprises a concentrate.

4. Apparatus according to any of the preceding claims, wherein the pH sensor comprises a pH meter comprising a pH measuring electrode which extends through a wall of said waste tank into said mixture, and a high input impedance meter that is located externally of the waste tank.

5. Apparatus according to any of the preceding claims, wherein the predetermined threshold is set according to the upper end of a target range.

6. Apparatus according to claim 5, wherein the target pH range is 8.4 - 8.9 and said predetermined threshold is pH 9.

7. Apparatus according to any of the preceding claims, wherein the same dose of neutralizing agent is caused to be dispensed by the dispensing device each time the processor determines that the pH level of the mixture is at or above said predetermined threshold level.

8. Apparatus according to claim 7, wherein said outlet is opened for the same predetermined period of time each time the processor determines that the pH level of the mixture is at or above said predetermined threshold level.

9. Apparatus according to claim 7, further comprising a metering device for measuring a predetermined dose of the neutralizing agent to be dispensed in response to each said signal from said processor.

10. A kit of parts for a mobile sedimentitious/cementitious material container or mixer, the kit comprising a waste tank for receiving and storing a mixture of wash off water and waste sedimentitious/cementitious material collected during a washing process, at least one pH sensor adapted to be mounted in or on said waste tank to measure a pH level of said mixture and output pH data representative thereof, a processor having an input communicably coupled to an output of said pH sensor for receiving said pH data and configured to generate a signal if said pH level is at or above a predetermined threshold, and a dispensing device comprising a reservoir for storing a volume of a neutralising agent, an outlet adapted to be coupled to the interior of said waste tank, and a dose dispensing mechanism configured, in response to a signal from said processor, to measure and dispense a dose of said neutralising agent from said reservoir into said waste tank via said outlet.

11. A method for use in a washing process for a mobile sedimentitious/cementitious material container or mixer including a waste tank for receiving and storing a mixture of wash off water and waste sedimentitious/cementitious material collected during a washing process, the method comprising mounting at least one pH sensor in or on said waste tank and measuring therewith a pH level of said mixture so as to output pH data representative thereof, configuring a processor having an input communicably coupled to an output of said pH sensor for receiving said pH data to generate a signal if said pH level is at or above a predetermined threshold, providing a dispensing device comprising a reservoir for storing a volume of a neutralising agent, coupling an outlet of the reservoir to the interior of said waste tank, and providing a dose dispensing mechanism configured, in response to a signal from said processor, to measure and dispense a dose of said neutralising agent from said reservoir into said waste tank via said outlet.
